# FASCICULE DE BREVET EUROPEEN

(11) **EP 3 558 727 B1**
(45) Date de publication et mention de la délivrance du brevet: **06.10.2021**
(21) Numéro de dépôt: 17811987.1
(22) Date de dépôt: 15.11.2017
(51) Int. Cl.: B60H 1/24, B60H 1/34, B60H 3/02, B60H 1/00, F24F 13/078, F24F 6/14, F24F 6/06

(54) **SYSTEME DE TRAITEMENT THERMIQUE D'UN HABITACLE DE VEHICULE COMPRENANT UN NEBULISEUR**
SYSTEM ZUR THERMISCHEN BEHANDLUNG EINER FAHRGASTZELLE EINES FAHRZEUGS MIT EINEM VERNEBLER
SYSTEM FOR THERMICAL TREATMENT OF A VEHICLE INTERIOR COMPRISING A NEBULIZER

(30) Priorité: 20.12.2016 FR 1662855
(43) Date de publication de la demande: 30.10.2019
(73) Titulaire: Valeo Systemes Thermiques, 78322 Le Mesnil Saint Denis Cedex (FR)
(72) Inventeur: HARAND, Pascal, 78322 Le Mesnil Saint-Denis Cedex (FR); DUBOSC, Christophe, 93012 Bobigny (FR); BARILLOT, Thibaud, 93012 Bobigny (FR)
(74) Mandataire: Valeo Systèmes Thermiques
(86) Numéro de dépôt international: PCT/FR2017/053119
(87) Numéro de publication internationale: WO 2018/115610

(56) Documents cités:
- DE-A1- 19 847 884
- DE-A1-102008 047 866
- DE-U1- 29 916 102
- FR-A1- 3 011 623
- FR-A1- 3 034 175

## Description

Le domaine de la présente invention est celui des systèmes de traitement thermique d'un habitacle de véhicule, notamment automobile. L'invention relève plus spécifiquement des systèmes de traitement thermique comprenant un nébuliseur.

Généralement, le système de traitement thermique de l'habitacle d'un véhicule comprend un dispositif de ventilation configuré pour propulser un flux d'air vers l'habitacle. À cet effet, le dispositif de ventilation comprend un ventilateur d'une part et un aérateur d'autre part, l'aérateur étant situé dans l'habitacle du véhicule. En fonction de la demande des usagers, le flux d'air peut préalablement avoir été chauffé ou refroidi, notamment en amont du système de traitement thermique.

Ce système de traitement thermique de l'habitacle comprend aussi un dispositif de nébulisation configuré pour délivrer un fluide nébulisé. Pour cela, le dispositif de nébulisation comprend un réservoir de fluide et un nébuliseur permettant de générer un brouillard. Il est rappelé que la nébulisation est une technique permettant de produire un brouillard de fluide composé de gouttelettes ayant, par exemple, un diamètre de 2 à 50 micromètres. Une fois mélangé au flux d'air, le fluide nébulisé permet de procurer une sensation de fraîcheur aux usagers, notamment en augmentant le taux d'humidité dans l'habitacle.

Il est connu du document FR3011623 qu'une source lumineuse peut être utilisée pour éclairer le fluide nébulisé dans l'habitacle. Cet éclairage est, selon ce document, utilisé pour communiquer aux usagers des informations relatives à des paramètres climatiques ou routiers. Toutefois, il s'avère qu'un tel éclairage dans un habitacle de véhicule automobile peut gêner les usagers, notamment en les éblouissant.

Dans ce contexte, l'invention, telle que définie dans la revendication 1, a pour objet un système de traitement thermique d'un habitacle de véhicule comprenant :
- un dispositif de nébulisation configuré pour délivrer un fluide nébulisé,
- un dispositif de ventilation configuré pour propulser un flux d'air vers l'habitacle, le dispositif de ventilation comprenant au moins un aérateur,
- au moins une source lumineuse agencée pour éclairer au moins une partie du fluide nébulisé dans l'habitacle,
   la ou les source(s) lumineuse(s) étant positionnée(s) sur une surface située en périphérie de l'aérateur, caractérisé ce que le système comprend au moins un masque s'étendant en saillie de la surface sur laquelle la ou les source(s) lumineuse(s) sont située(s),
- le masque couvre au moins en partie la ou les source(s) lumineuse(s). Ainsi, le masque permet de cacher la ou les source(s) lumineuse(s) selon la plupart des angles de vues, par exemple pour un usager assis sur un siège du véhicule, tout en ne les empêchant pas d'éclairer le fluide nébulisé. Plus précisément, le masque s'étend dans le prolongement longitudinal du système de traitement thermique et se courbe au-dessus de la ou des source(s) lumineuse(s) de manière à les couvrir.
- les sources lumineuses sont réparties suivant un cercle ayant pour centre un centre de l'aérateur.
- toutes les sources lumineuses sont situées dans un demi-cercle ayant pour rayon un rayon du cercle sur lequel les sources lumineuses sont réparties, le demi-cercle étant tangent à une partie la plus longue du masque. La partie la plus longue du masque est mesurée entre la surface sur laquelle les sources lumineuses sont situées et un bord libre du masque.
- le masque est bombé dans sa partie la plus longue. La partie la plus longue du masque est mesurée entre la surface à partir de laquelle il s'étend en saillie et le bord libre du masque. C'est la surface extérieure du masque, délimitant la partie la plus longue du masque, qui est bombée.
- le masque s'étend autour de l'aérateur suivant un cercle ayant pour centre un centre de l'aérateur. Ainsi, le masque peut s'étendre en totalité ou en partie autour de l'aérateur. Par « autour de l'aérateur » on entend que le masque est situé à une distance constante de l'axe principal de l'aérateur.
- la surface supportant la ou les source(s) lumineuse(s) et le masque sont monobloc.

La présence d'un tel masque permet de ne pas éblouir les usagers du véhicule tout en permettant l'éclairage du fluide nébulisé, ce qui permet de renforcer la sensation d'un paramètre climatique ressenti par les usagers sans les importuner visuellement, ce paramètre climatique pouvant par exemple être la température.

Selon différentes caractéristiques de l'invention prises seules ou en combinaison, on pourra prévoir que :
- la ou les source(s) lumineuse(s) sont configurée pour émettre un faisceau lumineux ayant un angle d'ouverture sensiblement égal à 120 degrés. On comprend alors que chaque source lumineuse peut émettre un cône individuel de lumière de n'importe quel angle, tant que le faisceau lumineux émis global se présente sous la forme d'un cône ayant un angle de 120 degrés. Plus précisément, l'angle d'ouverture est mesuré dans un plan longitudinal et selon un axe vertical du système de traitement thermique, l'axe vertical passant au centre de la source lumineuse. En présence d'une unique source lumineuse ce faisceau lumineux forme un cône individuel de lumière, l'angle de 120 degrés est mesuré tour autour d'un axe optique de la source lumineuse, ce dernier étant perpendiculaire au plan de la surface sur laquelle la source lumineuse est située.
- il y a un nombre impair de source(s) lumineuse(s) située(s) autour de chaque aérateur.
- la ou les source(s) lumineuse(s) émettent une lumière de longueurs d'ondes comprise entre 400nm et 600nm, ces longueurs d'ondes étant associées aux couleurs froides.
- la ou les source(s) lumineuse(s) émettent une lumière de longueurs d'ondes comprise entre 600nm et 800nm, ces longueurs d'ondes étant associées aux couleurs chaudes.
- la ou les source(s) lumineuse(s) sont des diodes électroluminescentes (LED).
- un plan passant par un point le plus haut d'un bord libre du masque et par un point le plus bas de ce bord libre du masque et un plan passant par la surface sur laquelle la ou les source(s) lumineuse(s) sont située(s), forment un angle compris entre 10 et 50 degrés. Le point le plus haut et le plus bas sont identifiés selon un axe vertical du système, c'est-à-dire perpendiculaire au plancher du véhicule. Ainsi, on comprend que le bord libre du masque ne s'étend pas dans un plan parallèle à la surface.
- le masque est opaque. Ainsi, le masque ne laisse pas passer les rayons lumineux émis par la ou les source(s) lumineuse(s).
- une face interne du masque comprend un dispositif optique permettant de diffuser le faisceau lumineux émis par les sources lumineuses.
- un bord libre du masque présente une forme courbe vers l'intérieur du masque. Autrement dit, le bord libre du masque est concave selon un point de vue extérieur au masque.
- la surface supportant la ou les source(s) lumineuse(s) et l'aérateur sont monobloc. On comprend ici que cet ensemble monobloc formé de l'aérateur et de la surface bouge simultanément quand l'usager souhaite orienter le jet de fluides en provenance de l'aérateur.
- le dispositif de ventilation comprend un ventilateur de type radial.
- le dispositif de ventilation comprend au moins une conduite située entre le ventilateur et le ou les aérateur(s).
- le dispositif de nébulisation comprend un réservoir et une plaque ultrasons.
- le dispositif de nébulisation comprend au moins un conduit situé entre le réservoir et chaque aérateur. On comprend alors que le conduit transportant le fluide nébulisé ne communique pas avec le flux d'air tant que celui-ci est dans la conduite du dispositif de ventilation.

L'invention a également pour objet un véhicule automobile, caractérisé en ce qu'il comprend un système de traitement thermique tel que défini précédemment.

Selon une réalisation, le système de traitement thermique est installé entre deux sièges du véhicule. Plus précisément, le système est installé entre deux sièges avant du véhicule et le ou les aérateurs sont orientés de sorte à diffuser le fluide nébulisé vers les passagers arrière du véhicule.

D'autres caractéristiques et avantages de la présente invention apparaitront plus clairement à l'aide de la description qui suit et des dessins parmi lesquels :
- la figure 1 est une représentation schématique d'un système de traitement thermique selon l'invention ;
- la figure 2 est une représentation schématique d'un habitacle du véhicule dans lequel une partie du système de traitement thermique, selon l'invention, est montré ; et
- la figure 3 est une représentation en perspective des aérateurs permettant d'illustrer un exemple de réalisation d'un masque selon l'invention.

Il est tout d'abord à noter que si les figures exposent l'invention de manière détaillée pour sa mise en œuvre, elles peuvent bien entendu servir à mieux la définir le cas échéant. Il est également à noter que, sur l'ensemble des figures, les éléments similaires sont indiqués par la même référence.

Dans la description qui suit, les dénominations longitudinales ou transversales se réfèrent au système de traitement thermique. La direction longitudinale L correspond à l'axe principal du système de traitement thermique dans lequel il s'étend selon sa longueur mesurée sur un plancher du véhicule. La direction transversale T correspond à une droite perpendiculaire à la direction longitudinale L du système de traitement thermique dans un plan formé par le plancher du véhicule. La direction verticale V correspond à une droite perpendiculaire, à la fois, à la direction longitudinale L et à la direction transversale T du système de traitement thermique. La direction verticale V est donc perpendiculaire au plancher du véhicule.

Lorsque cela est opportun, le terme intérieur se réfère à l'intérieur d'une pièce ou à un côté intérieur d'une pièce, par opposition à l'extérieur d'une pièce, qui permet par exemple de qualifier des aspects visibles ou externes de la pièce, ou du côté extérieur de la pièce.

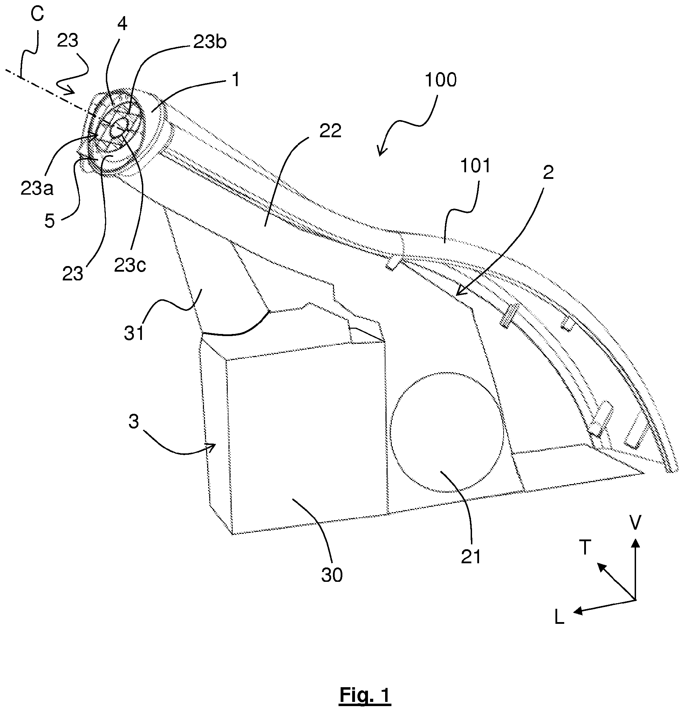

La figure 1 montre un système de traitement thermique 100 pour un habitacle de véhicule automobile. Ce système de traitement thermique 100 comprend un dispositif de ventilation 2 configuré pour propulser un flux d'air vers l'habitacle, un dispositif de nébulisation 3 configuré pour délivrer un fluide nébulisé et des sources lumineuses 4 destinées à éclairer au moins une partie du fluide nébulisé dans l'habitacle du véhicule.

Le dispositif de ventilation 2 comprend un ventilateur 21 permettant de générer le flux d'air dans une conduite 22. Le ventilateur 21 est, par exemple, de type radial, c'est-à-dire en cage d'écureuil. La conduite 22 est agencée pour orienter le flux d'air vers l'habitacle et présente à l'extrémité opposée du ventilateur 21 un ou plusieurs aérateurs 23. Comme cela est illustré, le dispositif de ventilation 2 comprend ici deux aérateurs 23. Les aérateurs 23 permettent, entre autres, de régler la direction du flux d'air dans l'habitacle. Chaque aérateur 23 présente une forme globalement cylindrique comprenant deux faces extrémités opposées selon l'axe du cylindre C. Une première face d'extrémité 23a est localisée dans l'habitacle alors que l'autre face d'extrémité est localisée à l'intérieur de la conduite 22. La première face d'extrémité 23a est, de préférence, plane. L'aérateur 23 se présente ici sous forme de grille 23b, avec en son centre un orifice circulaire 23c.

Le dispositif de nébulisation 3 comprend un réservoir de fluide 30 et un élément piézoélectrique permettant de nébuliser le fluide. Le fluide peut, par exemple, être de l'eau et l'élément piézoélectrique peut être une plaque ultrasons. Le dispositif de nébulisation 3 comprend au moins un conduit 31, dit conduit de nébulisation, s'étendant depuis le réservoir 30 vers un au moins des aérateurs 23, et notamment les deux aérateurs 23.

Plus précisément, le conduit de nébulisation 31 débouche au centre de l'aérateur 23, dans l'orifice circulaire 23c. Pour cela, l'aérateur 23 peut comprendre, sur sa deuxième face d'extrémité située à l'intérieur de la conduite 22, une zone de branchement réservée au conduit de nébulisation 31. Cette zone de branchement peut par exemple se présenter sous la forme d'une protubérance s'étendant sur les pourtours de l'orifice circulaire 23c et selon l'axe de l'aérateur 23. Le conduit de nébulisation 31, transportant le fluide nébulisé, ne communique pas avec la conduite 22 transportant le flux d'air émis par le dispositif de ventilation 2. Le mélange entre le fluide nébulisé et le flux d'air se fait alors en sortie de l'aérateur 23, directement dans l'habitacle. Pour se déplacer depuis le réservoir 30 vers l'aérateur 23, le fluide nébulisé est aspiré par effet venturi.

Pour éclairer le fluide nébulisé dans l'habitacle, des sources lumineuses 4 sont disposées sur une surface 5 située en périphérie de l'aérateur 23. Cette surface 5 peut être mobile avec l'aérateur 23 par rapport à la conduite 22. On comprend ici que le mouvement de l'aérateur 23 implique alors un mouvement de la surface 5. Alternativement, cette surface 5 peut être fixe par rapport l'aérateur 23, de sorte que seul l'aérateur 23 peut être mis en mouvement par l'usager. Ces sources lumineuses 4 permettent d'assurer un effet esthétique, par interaction des photons avec les microgouttes de fluide nébulisé, en permettant de créer une ambiance lumineuse. Cette ambiance lumineuse peut permettre de renforcer les sensations ressenties par l'usager à la vue du fluide nébulisé. Pour écarter tout risque d'éblouissement des usagers, le système de traitement thermique 100 comprend un masque 1 s'étendant en saillie de cette surface 5. Ce masque 1 peut, selon le point de vue, cacher au moins en partie les sources lumineuses 4, tout en autorisant l'éclairage du fluide nébulisé par les sources lumineuses 4.

Par ailleurs, le système de traitement thermique 100 peut comprendre des carénages 101 qui permettent de cacher et de protéger les différents éléments composant le système de traitement thermique 100. Ces carénages 101 peuvent entourer latéralement et sur le dessus le système de traitement thermique 100.

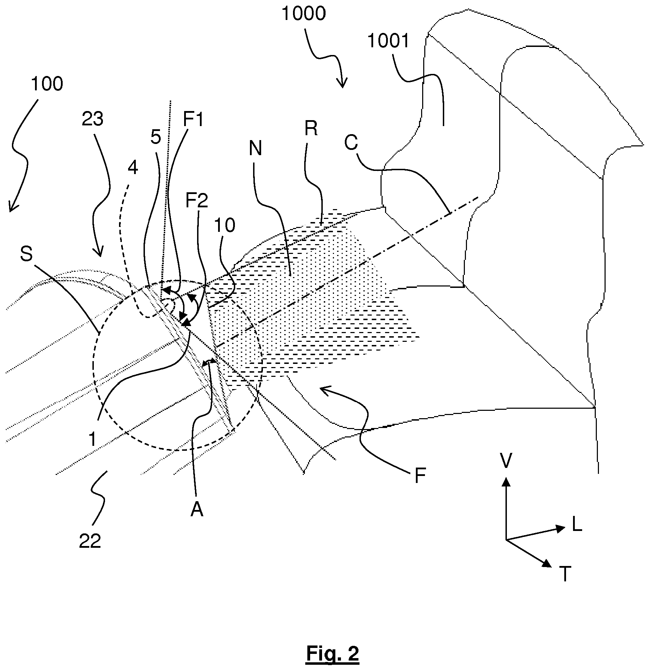

La figure 2 représente une partie du système de traitement thermique 100 dans un habitacle 1000 de véhicule automobile. Plus précisément, le système de traitement thermique 100 est ici installé entre deux sièges du véhicule. Ces deux sièges sont par exemple des sièges avant du véhicule afin de traiter thermiquement un espace dédié aux passagers arrière, et plus précisément au niveau des sièges arrières 1001 du véhicule. Le système de traitement thermique 100 peut être intégré à une console avant.

Cette figure 2 montre que le masque 1 s'étend en saillie de la surface 5. Plus précisément, le masque 1 s'étend ici obliquement par rapport à la surface 5. En effet, le masque 1 se présente sous la forme d'une portion de sphère S creuse. Cette sphère S a pour centre le centre de l'aérateur 23. Bien entendu, le masque 1 pourrait prendre toutes autres formes en saillie de la surface 5 permettant de masquer au moins une partie du faisceau lumineux émis par la ou les sources lumineuses 4.

La surface 5 supportant les sources lumineuses 4 et le masque 1 sont réalisés d'une seule pièce, c'est-à-dire monobloc. Dans le cas où la surface 5 est mobile avec l'aérateur 23 par rapport à la conduite 22, la surface 5, le masque 1 et l'aérateur 23 sont avantageusement, réalisés d'une seule pièce, c'est-à-dire monobloc. En fournissant une surface 5 mobile avec l'aérateur 23, un usager de n'importe quelle taille orientant l'aérateur vers son visage ne pourra pas être ébloui par le faisceau lumineux émis par les sources lumineuses 4.

Alternativement, dans le cas où la surface 5 est fixe tandis que l'aérateur 23 est mobile, le masque 1 est alors fixe avec la surface 5. Surface 5 et masque 1 forme alors un sous-ensemble unitaire, dans lequel l'aérateur 23 peut bouger. En fournissant une surface 5 fixe par rapport à l'aérateur 23, la conception et la fabrication du système de traitement thermique 100 sont simplifiées.

Un plan sécant de la sphère S délimite un bord libre 10 du masque 1. Ce plan sécant et le plan de la surface 5, sur laquelle les sources lumineuses 4 sont positionnées, forment un angle A compris entre 10 et 50 degrés. On comprend alors que le bord libre 10 du masque 1 ne s'étend pas dans un plan parallèle à la surface 5.

Par ailleurs, le bord libre 10 du masque 1 peut présenter une forme courbe vers l'intérieur du masque 1. Autrement dit, le bord libre 10 du masque 1 est concave selon un point de vue extérieur au masque 1. Dans ce cas, l'angle A peut être mesuré entre un plan passant par le point le plus haut et le plus bas du bord libre 10 et le plan de la surface 5 sur laquelle les sources lumineuses 4 sont positionnées. Le point le plus haut et le point le plus bas du bord libre 10 sont identifiés sur un axe vertical V du système, c'est-à-dire perpendiculaire au plancher du véhicule, le point le plus bas étant le point le plus près du plancher, tandis que le point le plus haut étant le point le plus éloigné du plancher.

Le masque 1 s'étend en partie au-dessus des sources lumineuses 4, notamment de manière à les couvrir et sa partie la plus longue présente une forme bombée. Plus précisément, la partie la plus longue du masque 1 est mesurée entre la surface 5 à partir de laquelle il s'étend et son bord libre 10.

Afin de bloquer le faisceau lumineux émis par les sources lumineuses 4 pour éviter l'éblouissement, le masque 1 est avantageusement opaque. Il peut être prévu un dispositif optique, telle qu'une plaque de diffusion, dans la partie bombée du masque 1 et notamment sur sa face interne, c'est-à-dire la face tournée vers les sources lumineuses 4, ce qui peut permettre de diffuser le faisceau lumineux émis par les sources lumineuses 4 en direction du fluide nébulisé.

La figure 2 illustre également de manière schématique le flux d'air R éjecté dans l'habitacle par une représentation sous forme de tirets. Ce flux d'air R forme ici un flux sous forme d'un cône d'air ayant un angle d'ouverture de 20 à 30 degrés dans l'habitacle autour de l'axe C de l'aérateur 23. Le fluide nébulisé dans l'habitacle N est représenté par des points et présente un flux sous forme d'un cône de fluide nébulisé ayant un angle d'ouverture de 10 à 15 degrés dans l'habitacle centré sur l'axe de l'orifice circulaire 23c, confondu ici avec l'axe C de l'aérateur C. Il est à noter que le cône formé par le fluide nébulisé N est contenu dans le cône formé par le flux d'air R.

Le faisceau lumineux F émis par une ou plusieurs sources lumineuses 4, forme un cône lumineux dont les bornes sont représentées par des lignes en pointillées. De préférence, les sources lumineuses 4 émettent ensemble un faisceau lumineux ayant un angle d'ouverture F1 de 120 degrés mesuré dans un plan vertical défini par l'axe longitudinal L et l'axe vertical V. Cependant, du fait de la présence du masque 1, ce faisceau lumineux émis présente un angle d'ouverture F2 sensiblement inférieur ou égal à 90 degrés, notamment en fonction de la position des sources lumineuses 4 par rapport au masque 1. Ainsi le masque 1 assure un blocage d'une partie du faisceau lumineux émis afin de ne pas éblouir le ou les usagers installés sur les sièges 1001.

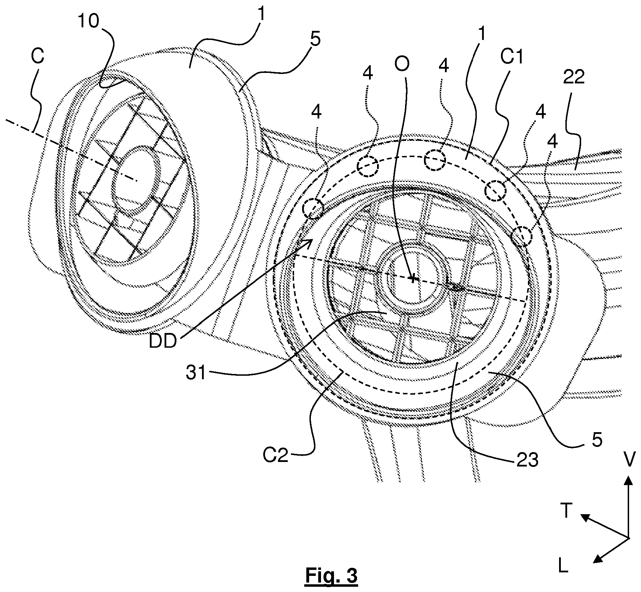

La figure 3 montre que la sphère formant le masque 1 s'étend également le long d'une courbe C1 autour de l'aérateur 23. Plus précisément, cette courbe C1 a pour centre un centre O de la première face d'extrémité 23a de l'aérateur 23.

Par ailleurs, la figure 3 montre que la surface 5, sur laquelle les sources lumineuses 4 sont situées, forme un disque annulaire autour de l'aérateur 23. Ce disque a pour centre, le centre O de l'aérateur 23 sur sa première face d'extrémité 23a et plus précisément, le centre de l'orifice 23c. Il est à noter que la surface 5 est située directement dans le voisinage de l'aérateur 23.

Les sources lumineuses 4 sont positionnées suivant un cercle C2 ayant pour centre le centre O. Le cercle C2 a un rayon inférieur au rayon externe du disque formé par la surface 5 et un rayon supérieur au cylindre formant l'aérateur 23. Autrement dit, les sources lumineuses 4 sont situées autour de l'aérateur 23, par exemple en formant un croissant de lune disposé autour de l'aérateur. Plus précisément, les sources lumineuses 4 sont situées au plus près du masque 1 sur la surface 5, par exemple à une distance de 1 à 5 millimètres de la face interne du masque, mesurée sur la surface 5.

On peut voir que les sources lumineuses 4 sont positionnées dans un demi-disque DD ayant pour rayon le rayon du cercle C2 suivant lequel les sources lumineuses sont positionnées autour de l'aérateur 23. Ce demi-disque DD est situé ici au plus haut de l'aérateur 23. Le point le plus haut de l'aérateur 23 est le point le plus éloigné du plancher sur l'axe vertical V du système de traitement thermique 100. Le demi disque DD est également tangent à la partie bombée du masque 1, c'est-à-dire la partie la plus longue du masque 1. On comprend alors que toutes les sources lumineuses 4 sont localisées dans une zone la plus haute autour de l'aérateur 23, cette localisation permettant d'éclairer le fluide nébulisé par le dessus. Plus précisément, les sources lumineuses 4 sont situées au plus près de la partie la plus longue du masque 1. Les sources lumineuses 4 sont ainsi logées sous la partie bombée du masque 1.

Il est à noter que le terme « source lumineuse » est à prendre au sens large, c'est-à-dire que tout point lumineux peut être considéré comme une source lumineuse 4. Les sources lumineuses 4 sont, par exemple, des diodes électroluminescentes (LED) présentant un angle d'ouverture sensiblement égal à 120 degrés. Ces diodes électroluminescentes (LED) peuvent être installées directement sur la surface 5. Afin d'éviter la manipulation de fils électriques souple dans un milieu potentiellement humide, il peut également être prévu de positionner ces diodes électroluminescentes ailleurs dans le système de traitement thermique 100, notamment plus près d'une alimentation électrique. Dans ce cas, les sources lumineuses 4 sur la surface 5 correspondent à une extrémité de guides lumineux et/ou de fibres optiques couplé(e)s optiquement avec une ou plusieurs diodes électroluminescentes, par exemple. Les diodes électroluminescentes peuvent, par exemple, être situées dans la conduite 22 du système de traitement thermique 100. Bien entendu, toute autre source de lumière peut être admise telle qu'une ampoule, une source laser ou une source halogène.

Le faisceau lumineux émis, par la ou les sources lumineuses 4 de n'importe quelle nature, présente des longueurs d'ondes comprises entre 400nm et 800nm. Plus précisément, le faisceau lumineux émis peut présenter des longueurs d'ondes comprises entre 400nm et 600nm, ce qui permet d'émettre une lumière de couleur froide. En effet, le fluide nébulisé ayant tendance à rafraîchir le flux d'air, il est avantageux d'utiliser le dispositif de nébulisation 3 lorsque le dispositif de ventilation 2 délivre un flux d'air frais, les couleurs du faisceau lumineux venant renforcer la sensation de froid ressenti par les usagers. Pour renforcer une sensation de chaud, le faisceau lumineux émis peut présenter des longueurs d'ondes comprises entre 600nm et 800nm. Bien entendu, le faisceau lumineux émis pourrait aussi renforcer un autre paramètre climatique que la température, comme par exemple le taux d'humidité délivré par le système de traitement 100.

Nous allons maintenant décrire un procédé de fonctionnement du système de traitement thermique 100, notamment dans son application à un véhicule automobile.

Une première étape du procédé comprend une mise en fonctionnement du dispositif de ventilation 2, par exemple à la demande d'un usager. Cette étape de mise en fonctionnement du dispositif de ventilation 2 peut être suivie d'une étape de réglage du flux d'air. Cette étape de réglage du flux d'air peut comprendre le réglage d'un débit souhaité du flux d'air et/ou d'une température souhaitée.

Une deuxième étape du procédé comprend une mise en fonctionnement du dispositif de nébulisation 3, par exemple à la demande d'un usager. Cette étape de mise en fonctionnement du dispositif de nébulisation 3 peut également être déclenchée automatiquement lorsqu'il est demandé une température inférieure à une température extérieure au véhicule, lors de l'étape précédente de réglage du flux d'air.

Une troisième étape du procédé comprend une mise en fonctionnement des sources lumineuses 4. Cette étape de mise en fonctionnement des sources lumineuses 4 est, avantageusement, mise en œuvre en même temps que la deuxième étape de mise en fonctionnement du dispositif de nébulisation 3. Ainsi, le faisceau lumineux émis par les sources lumineuses 4 est toujours diffusé par le fluide nébulisé. Cette étape de mise en fonctionnement des sources lumineuses 4 peut également comprendre le choix d'une intensité lumineuse, d'une couleur souhaitée et d'une extinction de certaines sources lumineuses par rapport à d'autre, par exemple une source lumineuse sur deux.

La description qui précède explique clairement comment l'invention permet d'atteindre les objectifs qu'elle s'est fixés et notamment de proposer un système de traitement thermique d'un habitacle de véhicule dans lequel au moins un masque permet de ne pas éblouir les usagers du véhicule lors de l'éclairage du fluide nébulisé.

## Revendications

1. Système de traitement thermique (100) d'un habitacle (1000) de véhicule comprenant :
- un dispositif de nébulisation (3) configuré pour délivrer un fluide nébulisé,
- un dispositif de ventilation (2) configuré pour propulser un flux d'air vers l'habitacle (1000), le dispositif de ventilation (2) comprenant au moins un aérateur (23),
- au moins une source lumineuse (4) agencée pour éclairer au moins une partie du fluide nébulisé dans l'habitacle (1000),
la ou les source(s) lumineuse(s) (4) étant positionnée(s) sur une surface (5) située en périphérie de l'aérateur (23), **caractérisé en ce que** le système comprend au moins un masque (1) s'étendant en saillie de la surface (5) sur laquelle la ou les source(s) lumineuse(s) (4) sont située(s), **en ce que** le masque (1) couvre au moins en partie la ou les source(s) lumineuse(s) (4), **en ce que** les sources lumineuses (4) sont réparties suivant un cercle (C2) ayant pour centre un centre (O) de l'aérateur (23), toutes les sources lumineuses (4) étant situées dans un demi-cercle (DD) ayant pour rayon un rayon du cercle (C2) sur lequel les sources lumineuses (4) sont réparties, le demi-cercle (DD) étant tangent à une partie la plus longue du masque (1), **en ce que** le masque (1) est bombé dans sa partie la plus longue, le masque (1) s'étendant autour de l'aérateur (23) suivant un cercle (C1) ayant pour centre un centre (O) de l'aérateur (23), la surface (5) supportant la ou les source(s) lumineuse(s) (4) et le masque (1) étant monobloc.

2. Système de traitement thermique selon la revendication 1, **caractérisé en ce que** la ou les source(s) lumineuse(s) (4) sont configurée pour émettre un faisceau lumineux ayant un angle d'ouverture sensiblement égal à 120 degrés.

3. Système de traitement thermique selon la revendication 1 ou 2, **caractérisé en ce qu'**un plan passant par un point le plus haut d'un bord libre (10) du masque (1) et par un point le plus bas de ce bord libre (10) du masque (1) et un plan passant par la surface (5) sur laquelle la ou les source(s) lumineuse(s) (4) sont située(s), forment un angle compris entre 10 et 50 degrés.

4. Système de traitement thermique selon l'une quelconque des revendications précédentes, **caractérisé en ce que** le masque (1) est opaque.

5. Système de traitement thermique selon l'une quelconque des revendications précédentes, **caractérisé en ce qu'**un bord libre (10) du masque (1) présente une forme courbe vers l'intérieur du masque (1).

6. Système de traitement thermique selon l'une quelconque des revendications précédentes, **caractérisé en ce que** le dispositif de ventilation (2) comprend un ventilateur (21) de type radial.

7. Système de traitement thermique selon l'une quelconque des revendications précédentes, **caractérisé en ce que** le dispositif de ventilation (2) comprend au moins une conduite (22) située entre le ventilateur (21) et le ou les aérateur(s) (23).

8. Système de traitement thermique selon l'une quelconque des revendications précédentes, **caractérisé en ce que** le dispositif de nébulisation (3) comprend un réservoir (30) et une plaque ultrasons.

9. Système de traitement thermique selon la revendication précédente, **caractérisé en ce que** le dispositif de nébulisation (3) comprend au moins un conduit (31) situé entre le réservoir (30) et chaque aérateur (23).

10. Véhicule automobile, **caractérisé en ce qu'**il comprend un système de traitement thermique (100) défini selon l'une quelconque des revendications précédentes.

11. Véhicule automobile selon la revendication précédente, **caractérisé en ce que** le système de traitement thermique (100) est installé entre deux sièges du véhicule.

## Patentansprüche

1. System zur Wärmebehandlung (100) eines Fahrzeuginsassenraums (1000), umfassend:
- eine Vernebelungsvorrichtung (3), die dazu ausgebildet ist, ein vernebeltes Fluid auszugeben,
- eine Belüftungsvorrichtung (2), die dazu ausgebildet ist, einen Luftstrom zum Insassenraum (1000) zu treiben, wobei die Belüftungsvorrichtung (2) mindestens einen Lufttrichter (23) umfasst,
- mindestens eine Lichtquelle (4), die angeordnet ist, wenigstens einen Abschnitt des vernebelten Fluids im Insassenraum (1000) zu beleuchten, wobei die Lichtquelle(n) (4) auf einer Fläche (5) positioniert ist/sind, die sich am Rand des Lufttrichters (23) befindet, **dadurch gekennzeichnet, dass** das System mindestens eine Maske (1) umfasst, die sich von der Fläche (5) hervorstehend erstreckt, auf der sich die Lichtquelle(n) (4) befindet bzw. befinden, dadurch, dass die Maske (1) die Lichtquelle(n) (4) wenigstens teilweise abdeckt, dadurch, dass die Lichtquellen (4) gemäß einem Kreis (C2) verteilt sind, der als Mittelpunkt einen Mittelpunkt (O) des Lufttrichters (23) aufweist, wobei sich alle Lichtquellen (4) in einem Halbkreis (DD) befinden, der als Radius einen Radius des Kreises (C2) aufweist, auf dem die Lichtquellen (4) verteilt sind, wobei der Halbkreis (DD) einen längsten Abschnitt der Maske (1) tangiert, dadurch, dass die Maske (1) in ihrem längsten Abschnitt gewölbt ist, wobei sich die Maske (1) um den Lufttrichter (23) einem Kreis (C1) entlang erstreckt, der als Mittelpunkt einen Mittelpunkt (O) des Lufttrichters (23) aufweist, wobei die Fläche (5), die die Lichtquelle(n) (4) trägt, und die Maske (1) einstückig ausgebildet sind.

2. Wärmebehandlungssystem nach Anspruch 1, **dadurch gekennzeichnet, dass** die Lichtquelle(n) (4) dazu ausgebildet sind, ein Lichtbündel mit einem Öffnungswinkel zu emittieren, der im Wesentlichen gleich 120 Grad ist.

3. Wärmebehandlungssystem nach Anspruch 1 oder 2, **dadurch gekennzeichnet, dass** eine Ebene, die durch einen höchsten Punkt eines freien Rands (10) der Maske (1) und durch einen tiefsten Punkt dieses freien Rands (10) der Maske (1) verläuft, und eine Ebene, die durch die Fläche (5) verläuft, auf der sich die Lichtquelle(n) (4) befindet bzw. befinden, einen Winkel zwischen 10 und 50 Grad bilden.

4. Wärmebehandlungssystem nach einem der vorhergehenden Ansprüche, **dadurch gekennzeichnet, dass** die Maske (1) lichtundurchlässig ist.

5. Wärmebehandlungssystem nach einem der vorhergehenden Ansprüche, **dadurch gekennzeichnet, dass** ein freier Rand (10) der Maske (1) eine Form aufweist, die zum Inneren der Maske (1) gekrümmt ist.

6. Wärmebehandlungssystem nach einem der vorhergehenden Ansprüche, **dadurch gekennzeichnet, dass** die Belüftungsvorrichtung (2) einen Lüfter (21) vom radialen Typ umfasst.

7. Wärmebehandlungssystem nach einem der vorhergehenden Ansprüche, **dadurch gekennzeichnet, dass** die Belüftungsvorrichtung (2) mindestens eine Leitung (22) aufweist, die sich zwischen dem Lüfter (21) und dem bzw. den Lufttrichter(n) (23) befindet.

8. Wärmebehandlungssystem nach einem der vorhergehenden Ansprüche, **dadurch gekennzeichnet, dass** die Vernebelungsvorrichtung (3) einen Vorratsbehälter (30) und eine Ultraschallplatte umfasst.

9. Wärmebehandlungssystem nach dem vorhergehenden Anspruch, **dadurch gekennzeichnet, dass** die Vernebelungsvorrichtung (3) mindestens einen Kanal (31) umfasst, der sich zwischen dem Vorratsbehälter (30) und jedem Lufttrichter (23) befindet.

10. Kraftfahrzeug, **dadurch gekennzeichnet, dass** es ein Wärmebehandlungssystem (100) nach einem der vorhergehenden Ansprüche umfasst.

11. Kraftfahrzeug nach dem vorhergehenden Anspruch, **dadurch gekennzeichnet, dass** das Wärmebehandlungssystem (100) zwischen zwei Sitzen des Fahrzeugs eingebaut ist.

## Claims

1. System (100) for the thermal treatment of a vehicle interior (1000), comprising:
- a nebulizer device (3) configured to deliver a nebulized fluid,
- a ventilation device (2) configured to propel an air flow into the vehicle interior (1000), the ventilation device (2) comprising at least one air vent (23),
- at least one light source (4) designed to illuminate at least a part of the nebulized fluid in the vehicle interior (1000),
the light source(s) (4) being positioned on a surface (5) situated at the periphery of the air vent (23), **characterized in that** the system comprises at least one mask (1) protruding from the surface (5) on which the light source(s) (4) are situated, **in that** the mask (1) at least partially covers the light source(s) (4), **in that** the light sources (4) are distributed about a circle (C2), the centre of which is a centre (O) of the air vent (23), all of the light sources (4) being situated in a semicircle (DD), the radius of which is a radius of the circle (C2) on which the light sources (4) are distributed, the semicircle (DD) being tangent to the longest part of the mask (1), **in that** the mask (1) is domed in its longest part, the mask (1) extending about the air vent (23) in a circle (C1), the centre of which is a centre (O) of the air vent (23), the surface (5) supporting the light source(s) (4) and the mask (1) being in one piece.

2. Thermal treatment system according to Claim 1, **characterized in that** the light source(s) (4) are configured to emit a light beam with an opening angle substantially equal to 120 degrees.

3. Thermal treatment system according to Claim 1 or 2, **characterized in that** a plane passing through a highest point of a free edge (10) of the mask (1) and through a lowest point of this free edge (10) of the mask (1) and a plane passing through the surface (5) on which the light source(s) (4) are situated form an angle of between 10 and 50 degrees.

4. Thermal treatment system according to any one of the preceding claims, **characterized in that** the mask (1) is opaque.

5. Thermal treatment system according to any one of the preceding claims, **characterized in that** a free edge (10) of the mask (1) has a shape curved towards the inside of the mask (1).

6. Thermal treatment system according to any one of the preceding claims, **characterized in that** the ventilation device (2) comprises a radial-type fan (21).

7. Thermal treatment system according to any one of the preceding claims, **characterized in that** the ventilation device (2) comprises at least one pipe (22) situated between the fan (21) and the air vent(s) (23).

8. Thermal treatment system according to any one of the preceding claims, **characterized in that** nebulizer device (3) comprises a tank (30) and an ultrasonic plate.

9. Thermal treatment system according to the preceding claim, **characterized in that** the nebulizer device (3) comprises at least one duct (31) situated between the tank (30) and each air vent (23).

10. Motor vehicle, **characterized in that** it comprises a thermal treatment system (100) defined according to any one of the preceding claims.

11. Motor vehicle according to the preceding claim, **characterized in that** the thermal treatment system (100) is installed between two seats of the vehicle.
